# EUROPÄISCHE PATENTANMELDUNG

(11) **EP 3 162 984 A1**
(43) Veröffentlichungstag der Anmeldung: **03.05.2017**
(21) Anmeldenummer: 15192479.2
(22) Anmeldetag: 01.11.2015
(51) Int. Cl.: E04H 15/42, B64D 17/40, B60J 7/14, B61D 39/00, B63B 7/06, E04H 9/14

(54) **STRUKTURELEMENT**

(71) Anmelder: Jungfer, Bernhard, 5020 Salzburg (AT)
(72) Erfinder: Jungfer, Bernhard, 5020 Salzburg (AT)
(74) Vertreter: Herrmann, Johanna

(57) **Zusammenfassung**

Ein Strukturelement (10, 100, 200) enthält ein Grundelement (1, 101, 201, 301, 401, 406, 408) und eine Mehrzahl von Einlageelementen (2, 3, 4, 5, 102, 103, 104, 105, 202, 203, 204, 205, 302, 303, 304, 305, 402, 403, 404, 405, 407, 409). Das Grundelement ist als biegeschlaffes Blattelement (13, 113, 213, 313, 413, 416, 419) ausgebildet, wobei das biegeschlaffe Blattelement eine erste Blattoberfläche (11, 111, 211, 311, 411, 414, 417) und eine zweite Blattoberfläche (12, 112, 212, 312, 412, 415, 418) aufweist. Die erste Blattoberfläche liegt der zweiten Blattoberfläche gegenüber. Die Einlageelemente sind mit dem biegeschlaffen Blattelement verbunden. Die Einlageelemente sind im biegeschlaffen Blattelement verschiebbar gelagert, wobei durch die Einlageelemente das biegeschlaffe Blattelement derart spannbar ist, dass jedes der Einlageelemente zusammen mit dem biegeschlaffen Blattelement eine formstabile Oberfläche ausbildet.

## Beschreibung

Gegenstand der Erfindung ist ein Strukturelement sowie ein Verfahren zur Herstellung eines derartigen Strukturelements. Dieses Strukturelement enthält ein Grundelement und ein Einlageelement, wobei das Grundelement als faltbares, flexibles flächiges Blattelement ausgebildet ist.

Die EP2476540 A1 zeigt ein plattenförmiges Versteifungselement, welches in einem faserverstärkten Laminat verwendet wird sowie ein Windturbinenschaufelblatt, welches ein derartiges plattenförmiges Versteifungselement enthält. Dieses plattenförmige Versteifungselement enthält zumindest einen Versteifungsstreifen, der mit einer Grundschicht fest verbunden ist, wobei der Verstärkungsstreifen temporär oder dauerhaft durch ein Verbindungsmittel mit der Grundschicht verbunden ist. Der Verstärkungsstreifen ist hierbei über ein Streifenmuster mit der Grundschicht verbunden. Dieses Streifenmuster wird erhalten, indem ein Streifen eines Verbindungsmittels auf die Oberfläche der Grundschicht aufgetragen wird und anschliessend eine Verpressung des Verstärkungsstreifens mit dem ebenfalls als Streifen ausgebildeten Verbindungsmittel erfolgt, sodass der Verstärkungsstreifen in dem Verbindungsmittel aufgenommen ist. Das Verbindungsmittel ist gleichzeitig mit der Grundschicht verbunden. Somit wird der Verstärkungsstreifen mit der Grundschicht durch das Verbindungsmittel verbunden, insbesondere verklebt. Als Verbindungsmittel kommt neben einem Klebstoff, ein Kunstharz oder eine Klemme in Betracht. Das Verbindungsmittel kann nicht an allen Stellen des Verstärkungsstreifens angebracht sein, was eine gewisse Flexibilität des Verbindungsstreifens zwischen den Klebestellen oder Klemmstellen ermöglicht. Für die in EP 2 476 540 A1 beschriebene Anwendung für ein Windturbinenschaufelblatt kann das Versteifungselement somit an dessen gekrümmte Oberfläche angepasst werden. Das Versteifungselement gemäss EP 2 476 540 A1 ist ein formstabiles dünnwendiges Schalenelement, welches für die gewünschte Anwendung eine gewisse Elastizität zulässt.

In der US20050151015 ist eine flexible Haut gezeigt, welche zur Auflage auf eine Strukturoberfläche bestimmt ist. Diese flexible Haut besteht aus einer ersten Schicht aus einem Elastomer, einer zweiten Schicht aus einem Elastomer sowie einer zwischen der ersten und der zweiten Schicht verlaufenden ebenen Feder. Diese Feder besteht aus einem Aluminium- oder Stahlskelett, welches aus durchgehenden Drähten besteht, die sich von einem Ende der Haut zu dem gegenüberliegenden Ende der Haut erstrecken. Die Drähte können periodische Windungen aufweisen, welche untereinander verbunden sein können, dass Aluminium- oder Stahlskelett zusammen mit der ersten und zweiten Schicht eine in der Skelettebene formstabile Haut ausbildet. Diese Haut weist in einer Normalebene zur Skelettebene eine Flexibilität auf, damit sie auf eine unebene Oberfläche eines Grundkörpers aufgelegt werden kann. Zudem kann die Haut Bewegungen des Grundkörpers mitmachen, ohne beschädigt zu werden, da Formänderungen durch die Elastizität der Elastomerschichten sowie durch das Skelett aufgenommen werden kann. Die Windungen der Drähte des Skeletts können je nach der Bewegung des Grundkörpers gedehnt oder gestaucht werden, ohne dass es zu einer unzulässigen Dehnung oder Stauchung des Drahtes kommt.

Ein Nachteil der vorhergehenden Ausführungsbeispiele für ein plattenförmiges Versteifungselement oder eine derartige Haut ist ihre Sperrigkeit. Die Beweglichkeit in einer Normalebene zu der Plattenebene ist auf die Anpassung eines unebenen, beispielsweise konkav oder konvex gekrümmten Grundkörpers beschränkt. Wenn das plattenförmige Versteifungselement oder die Haut nicht am selben Ort hergestellt werden, sind entsprechende Vorkehrungen für den Transport sowie die Lagerung der aus dem Stand der Technik bekannten Versteifungselemente erforderlich.

Aufgabe der Erfindung ist daher, ein Strukturelement zu schaffen, das zusammenfaltbar ist.

Die Lösung der Aufgaben der Erfindung erfolgt durch die Merkmale des Anspruchs 1. Weitere vorteilhafte Ausführungen sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Strukturelement. Das Strukturelement kann mittels unterschiedlicher Herstellungsverfahren erstellt werden, sowie aus unterschiedlichen Materialen bestehen, sodass die Beschreibung eines bestimmten Ausführungsbeispiels nur als beispielhaft anzusehen ist. In der Beschreibung und den Ansprüchen werden die Begriffe "enthalten", "umfassen", "aufweisen" als "enthalten, aber nicht beschränkt auf.." interpretiert.

Ein Strukturelement enthält ein Grundelement und eine Mehrzahl von Einlageelementen, wobei das Grundelement als biegeschlaffes Blattelement ausgebildet ist. Das biegeschlaffe Blattelement weist eine erste Blattoberfläche und eine zweite Blattoberfläche auf, wobei die erste Blattoberfläche der zweiten Blattoberfläche gegenüber liegt, wobei die Einlageelemente mit dem biegeschlaffen Blattelement verbunden sind. Die Einlageelemente sind im biegeschlaffen Blattelement verschiebbar gelagert, wobei durch die Einlageelemente das biegeschlaffe Blattelement derart spannbar ist, dass jedes der Einlageelemente zusammen mit dem biegeschlaffen Blattelement eine formstabile Oberfläche ausbildet. Insbesondere bilden die Einlageelemente untereinander keine Knotenpunkte aus. Die Einlageelemente sind insbesondere derart angeordnet, dass zwischen den Einlageelementen eine Faltlinie ausgebildet werden kann, die sich von einer Kante des biegeschlaffen Blattelements zu einer gegenüberliedenden Kante des biegeschlaffen Blattelements erstreckt.

Insbesondere kann zumindest ein Teil der Einlageelemente als stabförmiges Einlageelement ausgebildet sein. Insbesondere kann das Strukturelement eine Mehrzahl von stabförmigen Einlageelementen enthalten, wobei durch die Einlageelemente das biegeschlaffe Blattelement derart spannbar ist, dass das Einlageelement mit dem Grundmaterial des biegeschlaffen Blattelement eine formstabile Oberfläche ausbildet.

Unter einem Blattelement ist ein flächiges Plattenelement zu verstehen, wobei die Wandstärke des Plattenelements weniger als 1/10 der Länge, Breite oder des Durchmessers des Plattenelements beträgt. Insbesondere liegt die Wandstärke des Blattelements bei maximal 1 cm. Nach einem Ausführungsbeispiel kann die Wandstärke des Blattelements maximal 1 mm betragen.

Unter einen biegeschlaffen Blattelement ist ein faltbares oder flexibles Blattelement zu verstehen. Dieses Blattelement kann sich nach Art einer Folie an die Oberfläche eines Grundkörpers anpassen oder kann eine beliebig geformte ebene oder gekrümmte Oberfläche ausbilden. Das biegeschlaffe Blattelement kann insbesondere ein Element der Gruppe der Kunststoffe oder der Metalle umfassen. Insbesondere kann ein faserverstärkter Kunststoff zum Einsatz kommen. Das biegeschlaffe Blattelement kann eine Gitterstruktur, ein Gewirke oder ein Gewebe enthalten.

Nach einem Ausführungsbeispiel enthält das Strukturelement Einlageelemente, die als stabförmige Einlageelemente ausgebildet sind, die eine Länge aufweisen, die mindestens das 10-fache der Dicke der stabförmigen Einlageelemente beträgt. Diese stabförmigen Einlageelemente sind insbesondere derart angeordnet, dass sie einander nicht kreuzen. Das heisst, ein Einlageelement hat keinen Knotenpunkt mit einem anderen Einlageelement auf dem Grundelement. Insbesondere hat keines der Einlageelemente einen Knotenpunkt mit einem anderen Einlageelement.

Nach einem Ausführungsbeispiel sind die stabförmigen Einlageelemente als Bogenelemente ausgebildet. Die Bogenelemente können unter Vorspannung stehen oder vor der Befestigung mit dem Grundelement gebogen werden, sodass sie eine Vorspannung auf das Grundelement ausüben. Hierdurch kann ein Strukturelement erhalten werden, welches nicht nur durch die Befestigung mit Verschiebemöglichkeit von Einlageelementen am Grundelement versteift werden kann und dabei gleichzeitig die Flexibilität bewahrt, eine gekrümmte, insbesondere konkav oder konvex geformte Oberfläche auszubilden, sondern zusätzlich durch die über das Bogenelement eingebrachte Vorspannung eine erhöhte Formstabilität erhalten kann.

Nach einem Ausführungsbeispiel weist ein Bogenelement einen ersten Schenkel und einen zweiten Schenkel sowie einen sich zwischen dem ersten und zweiten Schenkel erstreckenden Bogen auf, wobei der erste Schenkel mit dem Blattelement mittels eines ersten Aufnahmeelements verbunden ist und der zweite Schenkel mit dem Blattelement mittels eines zweiten Aufnahmeelement verbunden ist, sodass das Bogenelement unter Vorspannung steht. Durch das Bogenelement ist insbesondere das Blattelement zwischen dem ersten und zweiten Schenkel durch die Vorspannung des Bogenelements spannbar.

Nach einem Ausführungsbeispiel enthält das Blattelement eine Mehrzahl von Einlageelementen, wobei ein erster Teil der Einlageelemente eine erste Reihe oder Gruppe ausbilden, in welcher die Bogenelemente derart angeordnet sind, dass die ersten Enden von deren ersten Schenkel, sowie die zweiten Enden von deren zweiten Schenkel auf einer gemeinsamen Geraden liegen. Ein zweiter Teil der Einlageelemente bildet gemäss dieses Ausführungsbeispiels eine zweite Reihe oder Gruppe aus, in welcher die Bogenelemente derart angeordnet sind, dass die ersten Enden von deren ersten Schenkel, sowie die zweiten Enden von deren zweiten Schenkel auf einer gemeinsamen Geraden liegen. Insbesondere kann durch eine derartige Anordnung eine Faltung entlang der gemeinsamen Geraden oder einer Gerade erfolgen, die parallel zu dieser Geraden liegt. Somit ist ein derartiges Strukturelement trotz der durch die Bogenelemente erzielten hohen Steifigkeit an definierten Faltlinien faltbar und somit auf ein geringes Volumen reduzierbar, sodass das Strukturelement für den Transport oder die Lagerung auf ein minimales Packvolumen reduziert werden kann.

Nach einem Ausführungsbeispiel schliesst an ein Bogenelement einer ersten Reihe oder Gruppe ein Bogenelement einer zweiten Reihe oder Gruppe an, wobei das Bogenelement der ersten Reihe oder Gruppe um eine Gerade, welche parallel zu einer der Geraden durch eines der ersten oder zweiten Enden verläuft, gespiegelt und/oder versetzt angeordnet ist.

Eine regelmässige Anordnung der Einlageelemente gemäss eines der Ausführungsbeispiele erlaubt es, den Fertigungsprozess der Verbindung der Einlageelemente mit dem Grundelement zu automatisieren. Wenn die Einlageelemente mit dem Grundelement vernäht werden oder das Einlageelement auf dem Grundelement durch die Aufnahmelelemente geführt wird oder durch das Grundelement hindurch geführt wird, kann das Fertigungsverfahren durch das Vorsehen von regelmässig wiederkehrenden Mustern, die durch wiederkehrende gleiche Abstände zwischen den Einlageelementen erzeugbar sind, vereinfacht werden, bzw. ist eine einfache Programmierung einer Vorrichtung zum Verbinden der Einlageelemente mit dem Grundelement möglich. Insbesondere kann das Blattelement Öffnungen aufweisen oder eine Gitterstruktur ausbilden.

Nach einem Ausführungsbeispiel überlappen die ersten Schenkel eines ersten Bogenelements mit den zweiten Schenkeln eines zweiten Bogenelements zumindest teilweise, ohne einander zu berühren. Insbesondere überlappen die ersten Schenkel eines ersten Bogenelements mit den zweiten Schenkeln eines zweiten Bogenelements innerhalb eines durch die Geraden begrenzten Bandes. Insbesondere schliesst an ein Bogenelement der ersten Reihe ein Bogenelement der zweiten Reihe an, wobei das Bogenelement der ersten Reihe um eine Gerade, welche parallel zu den Geraden durch die Enden verläuft, gespiegelt angeordnet ist.

Nach einem Ausführungsbeispiel enthält die erste Reihe oder Gruppe das erste Bogenelement sowie zumindest ein zweites Bogenelement, wobei die zweite Reihe oder Gruppe ein erstes Bogenelement und/oder zumindest ein zweites Bogenelement enthält, wobei das erste Bogenelement der zweiten Reihe oder Gruppe mittig zwischen dem ersten und dem zweiten Bogenelement der ersten Reihe oder Gruppe angeordnet ist.

Nach einem Ausführungsbeispiel enthält die erste Reihe oder Gruppe das erste Bogenelement sowie zumindest ein zweites Bogenelement, wobei die zweite Reihe oder Gruppe ein erstes Bogenelement und/oder zumindest ein zweites Bogenelement enthält, wobei das erste Bogenelement der zweiten Reihe oder Gruppe aussermittig zwischen dem ersten und dem zweiten Bogenelement der ersten Reihe oder Gruppe angeordnet ist.

Nach einem Ausführungsbeispiel enthält Einlageelement ein erstes Bogenelement sowie zumindest ein zweites Bogenelement, wobei die Bogenelemente eine gemeinsame Symmetrieeachse aufweisen.

Nach einem Ausführungsbeispiel ist das zweite Bogenelement derart angeordnet, dass der Bogen die sich zwischen den Enden der Schenkel des ersten Bogenelements erstreckende Gerade schneidet, wobei insbesondere die Mittenachse des Bogens zwei Schnittpunkte mit der Gerade aufweist.

Nach einem Ausführungsbeispiel liegen die Schenkel des ersten Bogenelements und die Schenkel des zweiten Bogenelements einander gegenüber.

Nach einem Ausführungsbeispiel liegen die Schenkel des ersten Bogenelements dem Bogen des zweiten Bogenelements gegenüber.

Nach einem Ausführungsbeispiel ist ein erstes Einlageelement auf oder in einem ersten Grundelement angeordnet und ein zweites Einlageelement auf oder in einem zweiten Grundelement angeordnet, wobei das erste Grundelement und das zweite Grundelement einen Winkel zueinander einschliessen, der grösser als 0 Grad und kleiner als 180 Grad ist. Insbesondere kann das erste Einlageelement in oder auf einem ersten Blattelement und/oder das zweite Einlageelement in oder auf einem zweiten Blattelement angeordnet sein.

Nach einem Ausführungsbeispiel ist ein drittes Einlageelement auf oder in einem dritten Grundelement angeordnet. Insbesondere kann sich das dritte Grundelement parallel zu einem der ersten oder zweiten Grundelemente erstrecken.

Nach einem Ausführungsbeispiel ist das dritte Grundelement in einem Winkel zu einem der ersten oder zweiten Grundelemente angeordnet.

Das Aufnahmeelement kann ein Element aus der Gruppe einer Öffnung, einer Öse, einer Schlaufe, einer Schelle, einem ringförmigen Element, einem hakenförmigen Element, einer Nut, einem Geflecht, einem Faden, einem Draht enthalten.

Insbesondere weist das Grundelement mindestens eine Faltlinie auf, sodass ein Teil der Einlageelemente übereinander angeordnet werden kann, sodass das Grundelement in mindestens zwei Teilgrundelemente faltbar ist, wobei ein Teil der Einlageelemente auf einem ersten Teilgrundelement angeordnet ist, wobei ein weiterer Teil der Einlageelemente auf einem zweiten Teilgrundelement angeordnet ist. Die Teilgrundelemente und zugehörigen Einlageelemente können übereinander angeordnet werden, sodass das Grundelement auf weniger als die Hälfte, vorzugsweise auf weniger als ein Drittel seiner ursprünglichen Oberfläche reduzierbar ist.

Nach jedem der Ausführungsbeispiele können die Einlageelemente im Grundelement verschiebbar gelagert sein, sodass das Strukturelement auf maximal ein Drittel der Oberfläche zusammenfaltbar ist.

Ein Vorteil der erfindungsgemässen Lösung insbesondere gemäss jedes der Ausführungsbeispiele besteht darin, dass das Strukturelement beispielsweise für einen Transport zusammengefaltet werden kann und im zusammengefalteten Zustand platzsparend transportiert oder gelagert werden kann.

Ein derartiges Strukturelement kann beispielweise hergestellt werden, indem in einem ersten Schritt ein Grundelement bereitgestellt wird. In einem zweiten Schritt wird ein Einlageelement vorgespannt, in einem dritten Schritt wird das vorgespannte Einlageelement auf dem Grundelement befestigt. In einem vierten Schritt wird die Vorspannung des Einlageelements entfernt. Insbesondere kann das Einlageelement in einem Aufnahmeelement aufgenommen werden. Das Aufnahmeelement ist mit dem Grundelement fest verbunden oder kann Bestandteil des Grundelements sein. Das Einlageelement kann in dem Auflageelement bewegt werden, um die Form der Oberfläche des Strukturelements anzupassen. Wenn das Strukturelement zusammengefaltet wird, kann die Vorspannung im Aufnahmeelement vermindert werden, indem das Einlageelement durch die Bewegung im Aufnahmeelement entspannt wird.

Ein derartiges Strukturelement kann als Versteifungselement zum Einsatz kommen, es kann aber auch als Segel, als Flügelelement, als Fallschirm oder Gleitschirm Verwendung finden. Des Weiteren kann es Einsatz in bemannten oder unbemannten Fahrzeugen, insbesondere Luftfahrzeugen finden. Das Strukturelement kann beispielsweise als Regenschutz verwendet werden, beispielsweise in Form eines Zelts, einer Abdeckung für Ladegut oder Lagergut verwendet werden. Beispielsweise kann das Strukturelement als Abdeckplane für einen LKW oder einen Waggon eines Schienenfahrzeugs zum Einsatz kommen.

Das Strukturelement kann auch als Deckenelement für eine Halle oder als Tragwerk verwendet werden. Insbesondere kann es für ein temporär einzurichtendes Gebäude verwendet werden, beispielsweise für Messehallen, Sporthallen, Lager, mobile Spitäler, mobile Flüchtlingsunterkünfte, überdachte Festplätze und dergleichen.

Das Strukturelement kann auch als Stützelement ausgebildet sein. Beispielsweise kann das Strukturelement zu einer Röhre geformt werden. Die Röhren können als Strukturbauteil oder als Fluidkanal verwendet werden. Beispielsweise können derartige Strukturelemente als Hochwassersperre eingesetzt werden, indem sie mit dem Wasser gefüllt werden und derart eine Barriere gegen das Eindringen von Hochwasser in Keller oder andere Räumlichkeiten ausbilden. Eine derartige Röhre kann auch eine toroide Form aufweisen. Insbesondere kann die als Torus ausgebildete Röhre als Fluidreservoir für ein unter Druck stehendes Fluid ausgebildet sein. Beispielsweise kann eine derartige Röhre als Fahrzeugreifen zum Einsatz kommen. Eine weitere Anwendung des Strukturelements als Stützelement umfasst die Verwendung als schwimmfähiges Element. Beispielsweise kann das Strukturelement als Mantel für Wasserfahrzeuge verwendet werden.

Der Druck auf einer Seite des Strukturelements kann sich vom Druck auf der anderen Seite des Strukturelements unterscheiden. Insbesondere kann das Strukturelement eine geschlossene Oberfläche ausbilden, beispielsweise eine Kuppel, einen Ballon oder dergleichen umfassen. Diese Oberfläche wird durch das biegeschlaffe Blattelement gebildet. Die erste Blattoberfläche bildet hierbei eine Innenseite des Strukturelements aus. Die zweite Blattoberfläche bildet eine Aussenseite des Strukturelements aus. Wenn die Innenseite mit einem höheren Druck beaufschlagt wird, als die Aussenseite, kann das Strukturelement von seiner zusammengefalteten Anordnung in seine entfaltete Stellung übergeführt werden. Insbesondere ist durch die Anwendung eines Innendrucks eine werkzeugfreie Errichtung des Strukturelements ermöglicht. Zudem kann das Strukturelement sehr schnell errichtet werden, was beispielsweise als temporärer Wetterschutz für open-air Festivals, als Stadionüberdachung, Notunterkunft oder dergleichen Anwendung finden kann.

Durch die Einlageelemente wird das Strukturelement in seiner entfalteten Stellung gehalten, wobei hierzu die Aufrechterhaltung eines geringen Überdrucks auf der Innenseite des Strukturelements nützlich sein kann oder durch die Eigenspannung, welche durch die Einlageelemente im Strukturelement generiert worden sind, das Strukturelement ohne das Aufrechterhalten eines Überdrucks im vom Strukturelement begrenzten Innenraum in seiner entfalteten Stellung gehalten wird.

Nachfolgend wird das erfindungsgemässe Strukturelement anhand einiger Ausführungsbeispiele dargestellt. Es zeigen
Fig. 1 eine Ansicht auf ein Strukturelement nach einem ersten Ausführungsbeispiel,
Fig. 2 einen Schnitt durch das Strukturelement nach dem ersten Ausführungsbeispiel entlang der Schnittlinie A-A,
Fig. 3 eine Ansicht auf ein Strukturelement nach einem zweiten Ausführungsbeispiel,
Fig. 4 eine Ansicht auf ein Strukturelement nach einem dritten Ausführungsbeispiel,
Fig. 5 eine Ansicht auf ein Strukturelement nach einem vierten Ausführungsbeispiel,
Fig. 6a eine Draufsicht auf ein Strukturelement einer ersten Gruppe nach einem fünften Ausführungsbeispiel,
Fig. 6b eine Seitenansicht des Strukturelements gemäss Fig. 6a,
Fig. 6c eine Draufsicht auf ein Strukturelement einer zweiten Gruppe nach dem fünften Ausführungsbeispiel,
Fig. 6d eine Seitenansicht des Strukturelements gemäss Fig. 6c,
Fig. 6e eine im Wesentlichen isometrische Ansicht eines Strukturelements gemäss des fünften Ausführungsbeispiels,
Fig. 7 eine isometrische Ansicht einer ersten Variante der Anordnung der Einlageelemente des Strukturelements gemäss einer der Fig. 6a-6e,
Fig. 8 eine isometrische Ansicht einer zweiten Variante der Anordnung der Einlageelemente des Strukturelements gemäss einer der Fig. 6a-6e,
Fig. 9 eine erste Variante des Strukturelements nach dem vierten Ausführungsbeispiel,
Fig. 10 eine zweite Variante des Strukturelements nach dem vierten Ausführungsbeispiel,
Fig. 11 eine dritte Variante des Strukturelements nach dem vierten Ausführungsbeispiel,
Fig. 12 eine vierte Variante des Strukturelements nach dem vierten Ausführungsbeispiel.

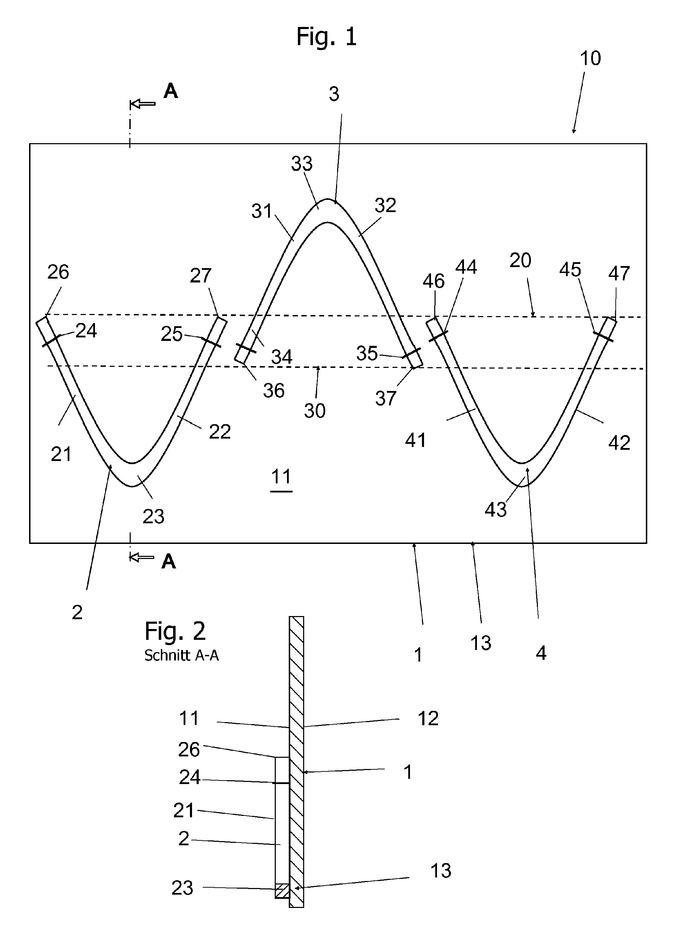

Fig. 1 zeigt eine erste Ansicht eines Strukturelements 10 nach einem ersten Ausführungsbeispiel enthaltend ein Grundelement 1 und eine Mehrzahl von Einlageelementen 2, 3, 4. Das Grundelement 1 ist als biegeschlaffes Blattelement 13 ausgebildet, wobei das biegeschlaffe Blattelement 13 eine erste Blattoberfläche 11 und eine zweite Blattoberfläche 12 aufweist, wobei die erste Blattoberfläche 11 der zweiten Blattoberfläche 12 gegenüber liegt. Die Einlageelemente 2, 3, 4 sind mit dem biegeschlaffen Blattelement 13 verbunden, wobei die Einlageelemente 2, 3, 4 im biegeschlaffen Blattelement 13 verschiebbar gelagert sind. Durch die Einlageelemente 2, 3, 4 ist das biegeschlaffe Blattelement 13 derart spannbar, dass das Einlageelement 2, 3, 4 zusammen mit dem biegeschlaffen Blattelement 13 eine formstabile Oberfläche ausbildet. Die Einlageelemente 2, 3, 4 sind in diesem Ausführungsbeispiel als stabförmige Einlageelemente ausgebildet. Die stabförmigen Einlageelemente sind insbesondere als Bogenelemente ausgebildet.

Jedes der in Fig. 1 gezeigten Bogenelemente weist einen ersten Schenkel 21, 31, 41 und einen zweiten Schenkel 22, 32, 42 sowie einen sich zwischen dem ersten und zweiten Schenkel erstreckenden Bogen 23, 33, 43 auf. Der erste Schenkel 21, 31, 41 ist mit dem Blattelement 13 mittels eines ersten Aufnahmeelements 24, 34, 44 verbunden und der zweite Schenkel 22, 32, 42 ist mit dem Blattelement über ein zweites Aufnahmeelement 25, 35, 45 verbunden, sodass das Bogenelement unter Vorspannung steht. Insbesondere kann das Bogenelement aus einem stabförmigen Einlageelement erhalten werden, welches durch Verbiegen in ein Bogenelement verformt wird. Die Vorspannung des Bogenelements hat eine Vorspannung des Blattelements 13 zur Folge, sodass durch das Bogenelement das Blattelement 13 versteift wird.

Das erste Aufnahmeelement 24, 34, 44 und/oder das zweite Aufnahmeelement 25, 35, 45 kann ein Element aus der Gruppe einer Öffnung, einer Öse, einer Schlaufe, einer Schelle, einem ringförmigen Element, einem hakenförmigen Element, einer Nut, einem Geflecht, einem Faden, einem Draht enthalten.

Das Blattelement 13 enthält eine Mehrzahl von Einlageelementen 2,3,4 wobei ein erster Teil der Einlageelemente 2,4 eine erste Reihe ausbildet, in welcher die Bogenelemente derart angeordnet sind, dass die Endpunkte 26, 46 von deren ersten Schenkel 21, 41, sowie die Endpunkte 27, 47 von deren zweiten Schenkel 22, 42 auf einer gemeinsamen Gerade 20 liegen. Ein zweiter Teil der Einlageelemente 3 bildet eine zweite Reihe aus, in welcher die Bogenelemente derart angeordnet sind, dass die ersten Enden 36 von deren ersten Schenkel 31, sowie die zweiten Enden 37 von deren zweiten Schenkel 32 auf einer gemeinsamen Gerade 30 liegen. Insbesondere können die ersten Schenkel 21, 41 eines ersten Bogenelements mit den zweiten Schenkeln 31 eines zweiten Bogenelements innerhalb eines durch die Geraden 20, 30 begrenzten Bandes überlappen.

Fig. 2 zeigt einen Schnitt durch das Strukturelement gemäss Fig. 1 entlang der Schnittlinie A-A, sodass das Blattelement 13 im Schnitt dargestellt ist. In Fig. 2 ist die erste Blattoberfläche 11 gezeigt, auf welcher die Einlageelemente angeordnet sind, sowie die zweite Blattoberfläche 12, auf welcher gemäss dieses Ausführungsbeispiels keine Einlageelemente angeordnet sind. Das Einlageelement 2 ist geschnitten dargestellt. Der Schnitt verläuft in der vorliegenden Darstellung durch den Scheitel des Einlageelements 2. In Fig. 1 sind daher nur ein Teil des Bogens 23, sowie der erste Schenkel 21 und das erste Ende 26 des Einlageelements 2 gezeigt. Der erste Schenkel 21 des Einlageelements 2 wird von dem ersten Aufnahmeelement 24 gehalten. Das Aufnahmeelement 24 umgreift den ersten Schenkel 21 und ist mit dem Blattelement 13 verbunden. Der erste Schenkel 21 kann in Längsrichtung relativ zum Aufnahmeelement 24 verschoben werden.

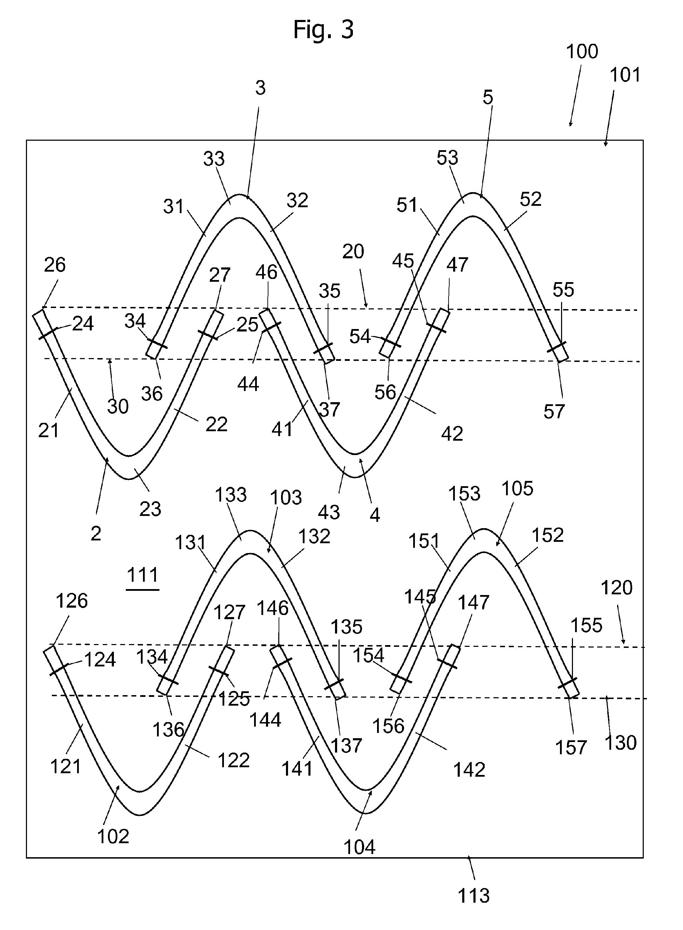

Fig. 3 zeigt ein weiteres Ausführungsbeispiel eines Strukturelements 100, gemäss welchem benachbarte Bogenelemente teilweise ineinander verschachtelt sein können. In Fig. 3 sind die einzelnen Bestandteile des Strukturelements 100 teilweise gleich bezeichnet wie in Fig. 1 oder Fig. 2, weil die Strukturelemente gleichen Aufbau wie in Fig. 1 oder Fig. 2 haben können und auch die Einlageelemente gleichen Aufbau haben können. Insbesondere ist das erste Bogenelement der ersten Reihe versetzt zum ersten Bogenelement der zweiten Reihe angeordnet. In Fig. 3 ist eine erste Serie von Einlageelementen 2, 3, 4, 5 enthaltend eine erste sowie eine zweite Reihe dargestellt. Fig. 3 zeigt zusätzlich zu den Einlageelementen 2, 3, 4 der Fig. 1, für die auf die entsprechende Beschreibung zu Fig. 1 verwiesen werden soll, ein weiteres Einlageelement 5. Das Einlageelement 5 ist wie die Einlageelemente 2, 3, 4 als ein Bogenelement ausgebildet. Das Einlageelement 5 weist ein erstes Ende 56 sowie ein zweites Ende 57 auf, zwischen denen sich ein erster Schenkel 51, sowie ein zweiter Schenkel 52 und ein dazwischen angeordneter Bogen 53 erstreckt.

In Fig. 3 ist eine zweite Serie von Einlageelementen 102, 103, 104, 105 gezeigt, wobei die zweite Serie von Einlageelementen 102, 103, 104, 105 gemäss dieses Ausführungsbeispiels dieselbe Anordnung aufweist, wie die erste Serie von Einlageelementen 2, 3, 4, 5.

Jedes der in Fig. 3 gezeigten Bogenelemente weist einen ersten Schenkel 21, 31, 41, 51, 121, 131, 141, 151 und einen zweiten Schenkel 22, 32, 42, 52, 122, 132, 142, 152 sowie einen sich zwischen dem ersten und zweiten Schenkel erstreckenden Bogen 23, 33, 43, 53, 123, 133, 143, 153 auf. Der erste Schenkel 21, 31, 41, 51, 121, 131, 141, 151 ist mit dem Blattelement mittels eines ersten Aufnahmeelements 24, 34, 44, 54 , 124, 134, 144, 154 verbunden und der zweite Schenkel 22, 32, 42, 52, 122, 132, 142, 152 ist mit dem Blattelement über ein zweites Aufnahmeelement 25, 35, 45, 55, 125, 135, 145, 155 verbunden, sodass das Bogenelement unter Vorspannung steht. Insbesondere kann das Bogenelement aus einem stabförmigen Einlageelement erhalten werden, welches durch Verbiegen in ein Bogenelement verformt wird.

Das Blattelement 113 enthält eine Mehrzahl von Einlageelementen 2, 3, 4, 5, 102, 103, 104, 105, wobei ein erster Teil der Einlageelemente 2,4, 102, 104 eine erste sowie eine dritte Reihe ausbildet, in welcher die Bogenelemente derart angeordnet sind, dass die ersten Enden 26, 46 126, 146 von deren ersten Schenkel 21, 41, 121, 141 sowie die zweiten Enden 27, 47, 127, 147 von deren zweiten Schenkel 22, 42, 122, 142 auf einer ersten gemeinsamen Gerade 20 bzw. einer dritten gemeinsamen Geraden 120 liegen. Ein zweiter Teil der Einlageelemente 3, 5, 103, 105 bildet eine zweite Reihe sowie eine vierte Reihe aus, in welcher die Bogenelemente derart angeordnet sind, dass die ersten Enden 36, 56, 136, 156 von deren ersten Schenkeln 31, 51, 131, 151 sowie die zweiten Enden 37, 57, 137, 157 von deren zweiten Schenkeln 32, 52, 132, 152 auf einer zweiten gemeinsamen Gerade 30 bzw. einer vierten gemeinsamen Geraden 130 liegen. Insbesondere können die ersten Schenkel 21, 41, 121, 141 eines ersten Bogenelements mit den ersten Schenkeln 31, 51, 131, 151 eines zweiten Bogenelements innerhalb eines durch die Geraden 20, 30 bzw. die Geraden 120, 130 begrenzten Bandes überlappend angeordnet sein.

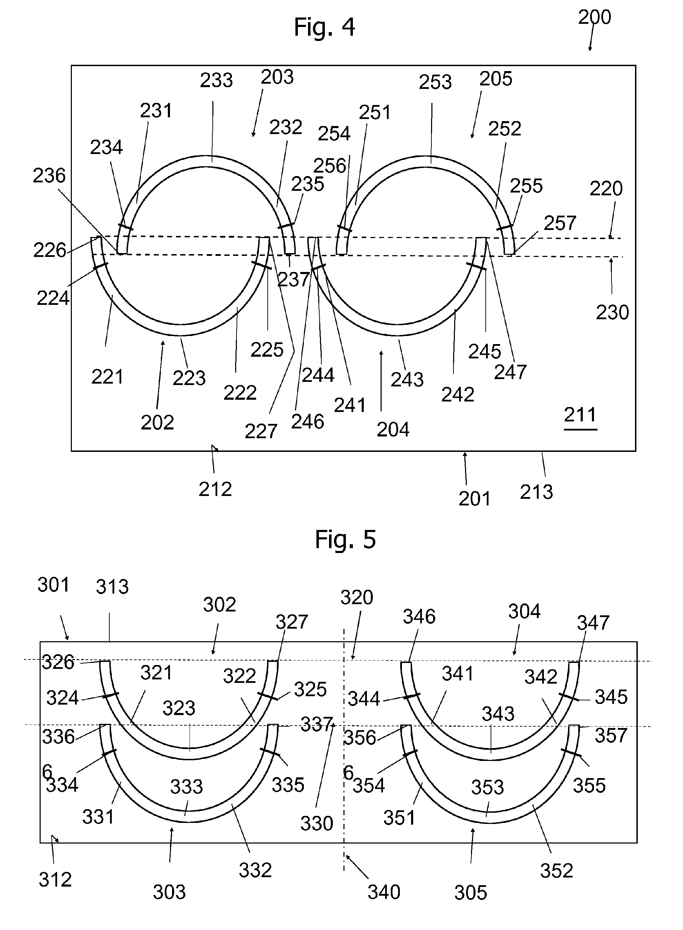

Wie in den vorhergehenden Ausführungsbeispielen können die ersten Schenkel 21, 31, 41, 51, 121, 131, 141, 151 und die zweiten Schenkel 22, 32, 42, 52, 122, 132, 142, 152 im Wesentlichen eine gerade Längsachse oder eine Krümmung aufweisen, sodass sie die Fortsetzung des Bogens 23, 33, 43, 53, 123, 133, 143, 153 ausbilden, was beispielsweise in Fig. 4 gezeigt ist.

Fig. 4 zeigt ein weiteres Ausführungsbeispiel eines Strukturelements 200, gemäss welchem benachbarte Bogenelemente teilweise ineinander verschachtelt sein können. Das Strukturelement 200 weist ein Grundelement 201 und eine Mehrzahl von Einlageelementen 202, 203, 204, 205 auf. Das Grundelement 201 ist als biegeschlaffes Blattelement 213 ausgebildet, wobei das biegeschlaffe Blattelement 213 eine erste Blattoberfläche 211 und eine zweite Blattoberfläche 212 aufweist, wobei die erste Blattoberfläche 211 der zweiten Blattoberfläche 212 gegenüber liegt. Die zweite Blattoberfläche 212 ist in Fig. 4 nicht sichtbar, da sie sich auf der Hinterseite der ersten Blattoberfläche 211 erstreckt. Die Einlageelemente 202, 203, 204, 205 sind mit dem biegeschlaffen Blattelement 213 verbunden, wobei die Einlageelemente 202, 203, 204, 205 im biegeschlaffen Blattelement 213 verschiebbar gelagert sind. Durch die Einlageelemente 202, 203, 204, 205 ist das biegeschlaffe Blattelement 213 derart spannbar, dass jedes der Einlageelemente 202, 203, 204, 205 zusammen mit dem biegeschlaffen Blattelement 213 eine formstabile Oberfläche ausbildet. Die Einlageelemente 202, 203, 204, 205 sind in diesem Ausführungsbeispiel als stabförmige Einlageelemente ausgebildet. Die stabförmigen Einlageelemente sind insbesondere als Bogenelemente ausgebildet.

Die Einlageelemente 203, 205 weisen dieselbe räumliche Ausrichtung auf, die Einlageelemente 202, 204 weisen eine räumliche Ausrichtung auf, die in Bezug auf die Einlageelemente 203, 205 um einen Winkel von 180° gespiegelt ist sowie in Richtung der Schnittlinie der Spiegelungsebene mit der Ebene, die durch die erste Blattoberfläche 211 aufgespannt wird, gegenüber den Einlageelementen 202, 204 versetzt angeordnet sind. Insbesondere bilden die Einlageelemente 202, 204 eine erste Gruppe von Einlageelementen aus. Die Einlageelemente 203, 205 bilden eine zweite Gruppe von Einlageelementen aus. Die erste Gruppe der Einlageelemente 202, 204 ist versetzt zur zweiten Gruppe der Einlageelemente 203, 205 angeordnet. Jedes der Einlageelemente ist als ein Bogenelement ausgebildet.

Jedes der in Fig. 4 gezeigten Bogenelemente weist einen ersten Schenkel 221, 231, 241, 251 und einen zweiten Schenkel 222, 232, 242, 252 sowie einen sich zwischen dem ersten und zweiten Schenkel erstreckenden Bogen 223, 233, 243, 253 auf. Der erste Schenkel 221, 231, 241, 251 ist mit dem Blattelement mittels eines ersten Aufnahmeelements 224, 234, 244, 254 verbunden und der zweite Schenkel 222, 232, 242, 252 ist mit dem Blattelement über ein zweites Aufnahmeelement 225, 235, 245, 255 verbunden, sodass das Bogenelement unter Vorspannung steht. Insbesondere kann das Bogenelement aus einem stabförmigen Einlageelement erhalten werden, welches durch Verbiegen in ein Bogenelement verformt wird.

Das Blattelement 213 enthält eine Mehrzahl von Einlageelementen 202, 203, 204, 205, wobei ein erster Teil der Einlageelemente 202, 204 eine erste Gruppe ausbildet, in welcher die Bogenelemente derart angeordnet sind, dass die ersten Enden 226, 246 von deren ersten Schenkel 221, 241 sowie die zweiten Enden 227, 247 von deren zweiten Schenkel 222, 242 auf einer ersten gemeinsamen Gerade 220 liegen. Ein zweiter Teil der Einlageelemente 203, 205 bildet eine zweite Gruppe aus, in welcher die Bogenelemente derart angeordnet sind, dass die ersten Enden 236, 256, von deren ersten Schenkeln 231, 251 sowie die zweiten Enden 237, 257 von deren zweiten Schenkeln 232, 252 auf einer zweiten gemeinsamen Gerade 230 liegen. Insbesondere können die ersten Schenkel 221, 241 eines ersten Bogenelements mit den ersten Schenkeln 231, 251 eines zweiten Bogenelements innerhalb eines durch die Geraden 220, 230 begrenzten Bandes überlappend angeordnet sein.

Die ersten Schenkel 221, 231, 241, 251 und die zweiten Schenkel 222, 232, 242, 252 weisen eine Krümmung auf, sodass sie die Fortsetzung des Bogens 223, 233, 243, 253 ausbilden.

Fig. 5 zeigt ein weiteres Ausführungsbeispiel eines Strukturelements 300. Das Strukturelement 300 weist ein Grundelement 301 und eine Mehrzahl von Einlageelementen 302, 303, 304, 305 auf. Das Grundelement 301 ist als biegeschlaffes Blattelement 313 ausgebildet, wobei das biegeschlaffe Blattelement 313 eine erste Blattoberfläche 311 und eine zweite Blattoberfläche 312 aufweist, wobei die erste Blattoberfläche 311 der zweiten Blattoberfläche 312 gegenüber liegt. Die zweite Blattoberfläche 312 ist in Fig. 5 nicht sichtbar, da sie sich auf der Hinterseite der ersten Blattoberfläche 311 erstreckt. Die Einlageelemente 302, 303, 304, 305 sind mit dem biegeschlaffen Blattelement 313 verbunden, wobei die Einlageelemente 302, 303, 304, 305 im biegeschlaffen Blattelement 313 verschiebbar gelagert sind. Durch die Einlageelemente 302, 303, 304, 305 ist das biegeschlaffe Blattelement 313 derart spannbar, dass jedes der Einlageelemente 302, 303, 304, 305 zusammen mit dem biegeschlaffen Blattelement 313 eine formstabile Oberfläche ausbildet. Die Einlageelemente 302, 303, 304, 305 sind in diesem Ausführungsbeispiel als stabförmige Einlageelemente ausgebildet. Die stabförmigen Einlageelemente sind insbesondere als Bogenelemente ausgebildet.

Die Einlageelemente 302, 303, 304, 305 weisen dieselbe räumliche Ausrichtung auf. Das Strukturelement kann weitere Einlageelemente enthalten, die parallel und/oder in Serie zu den Einlageelementen 302, 303, 304, 305 angeordnet sind und dieselbe räumliche Ausrichtung wie die Einlageelemente 302, 303, 304, 305 aufweisen. Insbesondere bilden die Einlageelemente 302, 303 eine erste Gruppe von Einlageelementen aus. Die neben den Einlageelementen 302, 303 gelegenen Einlageelemente 304, 305 können eine zweite Gruppe von Einlageelementen ausbilden. Die erste Gruppe der Einlageelemente 302, 303 ist in Bezug auf eine in der Zeichnungsebene der Fig. 5 vertikal verlaufende Symmetrieachse versetzt zur zweiten Gruppe der Einlageelemente 304, 305 angeordnet. Jedes der Einlageelemente ist insbesondere als ein Bogenelement ausgebildet. Insbesondere weist jedes der Bogenelemente einen Radius auf, der im Wesentlichen mit dem Radius eines benachbarten Bogenelements übereinstimmt. Das Bogenelement kann auch eine andere Form als die eines Kreisbogens aufweisen.

Jedes der in Fig. 5 gezeigten Bogenelemente weist einen ersten Schenkel 321, 331, 341, 351 und einen zweiten Schenkel 322, 332, 342, 352 sowie einen sich zwischen dem ersten und zweiten Schenkel erstreckenden Bogen 323, 333, 343, 353 auf. Der erste Schenkel 321, 331, 341, 351 ist mit dem Blattelement mittels eines ersten Aufnahmeelements 324, 334, 344, 354 verbunden und der zweite Schenkel 322, 332, ist mit dem Blattelement über ein zweites Aufnahmeelement 325, 335, verbunden, sodass das Bogenelement unter Vorspannung steht. Insbesondere kann das Bogenelement aus einem stabförmigen Einlageelement erhalten werden, welches durch Verbiegen in ein Bogenelement verformt wird. Selbstverständlich können weitere Aufnahmeelemente für jedes der Einlageelemente vorgesehen sein.

Das Blattelement 313 kann eine Mehrzahl von Einlageelementen 302, 303, 304, 305 enthalten, wobei ein erster Teil der Einlageelemente 302, 304 eine erste Gruppe ausbildet, in welcher die Bogenelemente derart angeordnet sind, dass die ersten Enden 326, 346 von deren ersten Schenkeln 321, 341 sowie die zweiten Enden 327, 347 von deren zweiten Schenkeln 322, 342 auf einer ersten gemeinsamen Gerade 320 liegen. Ein zweiter Teil der Einlageelemente 303, 305 bildet eine zweite Gruppe aus, in welcher die Bogenelemente derart angeordnet sind, dass die ersten Enden 336, 356, von deren ersten Schenkeln 331, 351 sowie die zweiten Enden 337, 357 von deren zweiten Schenkeln 332, 352 auf einer zweiten gemeinsamen Gerade 330 liegen. Insbesondere können die ersten Schenkel 321, 341 eines ersten Bogenelements die Gerade 330 schneiden. Ein Teil der Einlageelemente 302, 303 bildet eine erste Serie von Einlageelementen aus, ein weiterer Teil der Einlageelemente 304, 305 bildet eine zweite Serie von Einlageelementen aus. Die Einlageelemente 302, 303 der ersten Serie von Einlageelementen können um eine in der Zeichnungsebene vertikal angeordnete Symmetrieachse 340 gespiegelt werden, um die Einlageelemente 304, 305 der zweiten Serie von Einlageelementen zu bilden. Die Symmetrieachse 340 kann insbesondere eine Faltlinie ausbilden. Entlang dieser Faltlinie ist das Blattelement 313 faltbar, sodass das Strukturelement entlang der Symmetrieachse gefaltet werden kann.

Die ersten Schenkel 321, 331, 341, 351 und die zweiten Schenkel 322, 332, 342, 352 weisen eine Krümmung auf, sodass sie die Fortsetzung des Bogens 323, 333, 343, 353 ausbilden. Weil der Bogen jedes Einlageelements einer Serie in den Bogen des unmittelbar benachbarten Einlageelements derselben Serie hinein ragt, wird das Blattelement sowohl durch das jeweils in der Fig. 5 obere Einlageelement als auch durch das in der Fig. 5 benachbarte untere Einlageelement derselben Serie vorgespannt, sodass das Blattelement jeweils linksseitig und rechtsseitig der Symmetrieachse 340 vorgespannt ist. Hierdurch stehen die Gruppen der Einlageelemente unter Vorspannung, sodass die Einlageelemente der Gruppen eine Versteifung des Strukturelements bewirken. Zwischen der ersten und der zweiten Serie der Einlageelemente wird durch die Symmetrieachse 340 eine Faltlinie gebildet, sodass das Strukturelement entlang der Symmetrieachse faltbar ist. Hierdurch kann eine richtungsabhängige Versteifung erhalten werden, wobei gleichzeitig eine Faltbarkeit des Strukturelements entlang der Symmetrieachse 340 sowie gegebenenfalls weiterer Symmetrieachsen, die parallel zur Symmetrieachse 340 liegen, gewährleistet wird.

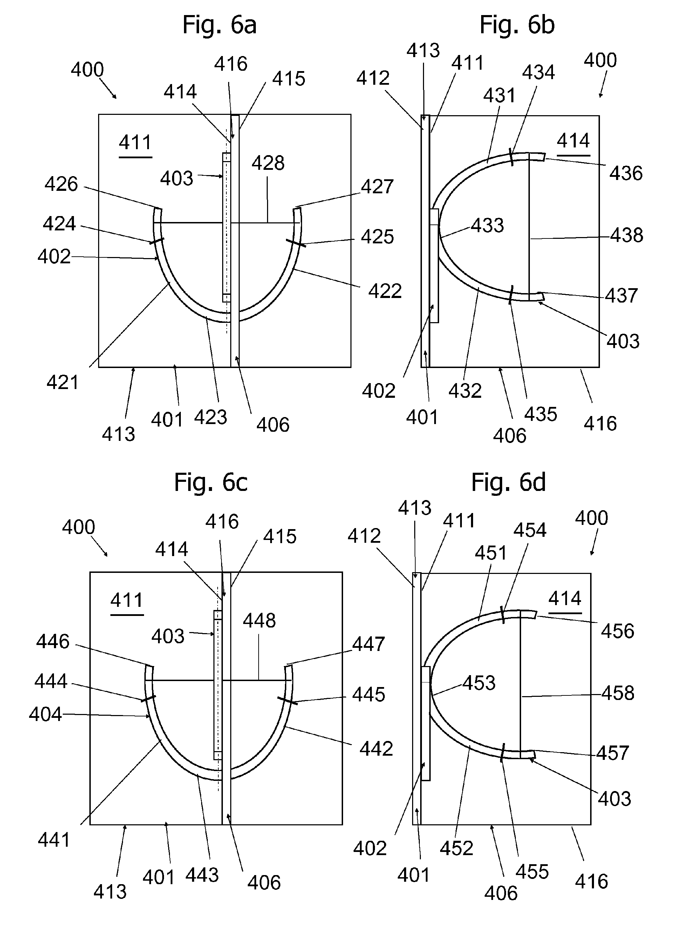

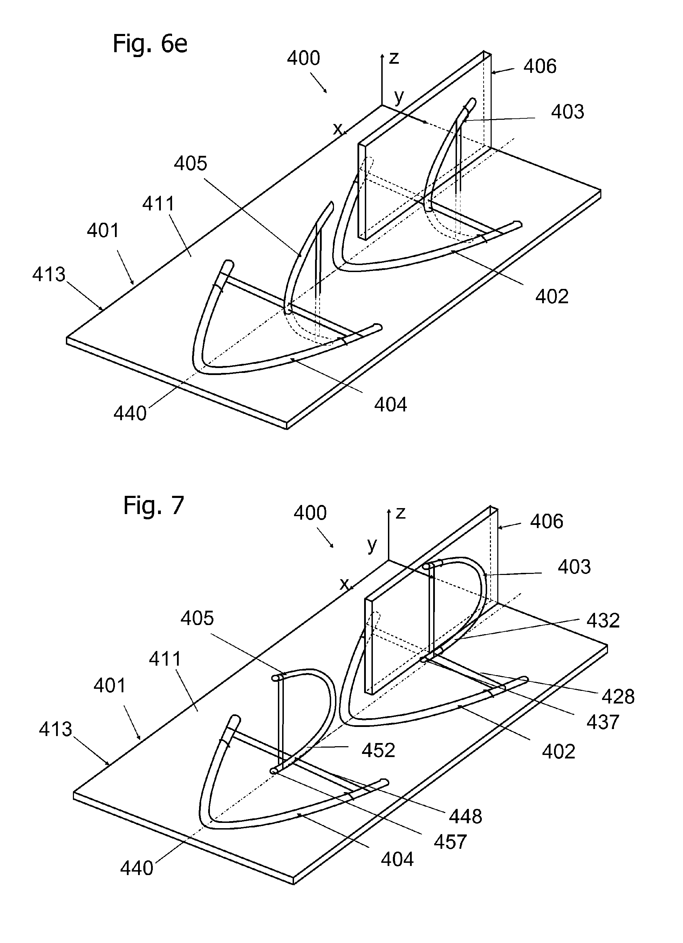

Fig. 6a, 6b, 6c, 6d und 6e zeigen ein weiteres Ausführungsbeispiel eines Strukturelements 400. Fig. 6a zeigt eine Draufsicht auf das Strukturelement 400. Fig. 6b zeigt eine Seitenansicht der Fig. 6a. Fig. 6c zeigt eine Draufsicht auf einen weiteren Abschnitt des Strukturelements 400. Fig. 6d zeigt eine Seitenansicht der Fig. 6c. Fig. 6e ist eine im Wesentlichen isometrische Ansicht eines Strukturelements 400. Jede der Fig. 6a, 6b, 6c, 6d, 6e zeigt nur einen Ausschnitt des Strukturelements 400, welches aus einer Mehrzahl Grundelemente 401, 406 sowie entsprechender Einlageelemente 402, 403, 404, 405 aufgebaut sein kann. Dieses Strukturelement 400 unterscheidet sich von den Strukturelementen der vorhergehenden Ausführungsbeispiele dahingehend, dass es ein erstes Grundelement 401, sowie zumindest ein zweites Grundelement 406 umfasst, die sich in zwei verschiedene Raumrichtungen erstrecken. Das Strukturelement 400 gemäss Fig. 6c weist somit das erste Grundelement 401, das zweite Grundelement 406 und eine Mehrzahl von Einlageelementen 402, 403, 404, 405 auf. Das Grundelement 401 ist als biegeschlaffes Blattelement 413 ausgebildet, wobei das biegeschlaffe Blattelement 413 eine erste Blattoberfläche 411 und eine zweite Blattoberfläche 412 aufweist, wobei die erste Blattoberfläche 411 der zweiten Blattoberfläche 412 gegenüber liegt. Die zweite Blattoberfläche 412 ist in Fig. 6a nicht sichtbar, da sie sich auf der in der Zeichnung nicht sichtbaren Hinterseite der ersten Blattoberfläche 411 erstreckt. Das Grundelement 406 ist als biegeschlaffes Blattelement 416 ausgebildet, wobei das biegeschlaffe Blattelement 416 eine erste Blattoberfläche 414 und eine zweite Blattoberfläche 415 aufweist, wobei die erste Blattoberfläche 414 der zweiten Blattoberfläche 415 gegenüber liegt. Die Einlageelemente 402, 403, 404, 405 sind mit dem biegeschlaffen Blattelement 413 bzw. mit dem biegeschlaffen Blattelement 416 verbunden, wobei die Einlageelemente 402, 403, 404, 405 im biegeschlaffen Blattelement 413 bzw. im biegeschlaffen Blattelement 416 verschiebbar gelagert sind. Durch die Einlageelemente 402, 403, 404, 405 ist das biegeschlaffe Blattelement 413 sowie das biegeschlaffe Blattelement 416 derart spannbar, dass jedes der Einlageelemente 402, 403, 404, 405 zusammen mit dem biegeschlaffen Blattelement 413 bzw. dem biegeschlaffen Blattelement 416 eine formstabile Oberfläche ausbildet. Die Einlageelemente 402, 403, 404, 405 sind in diesem Ausführungsbeispiel als stabförmige Einlageelemente ausgebildet. Die stabförmigen Einlageelemente sind insbesondere als Bogenelemente ausgebildet.

Die Einlageelemente 402, 404 weisen dieselbe räumliche Ausrichtung auf, was in Fig. 6e sichtbar ist. Die Einlageelemente 403, 405 weisen dieselbe räumliche Ausrichtung auf, die sich von der räumlichen Ausrichtung der Einlageelemente 402, 404 unterscheidet. Das Strukturelement kann weitere Einlageelemente enthalten, die parallel und/oder in Serie zu den Einlageelementen 402, 403, 404, 405 angeordnet sind und dieselbe räumliche Ausrichtung wie die entsprechenden Einlageelemente 402, 403, 404, 405 aufweisen. Insbesondere bilden die Einlageelemente 402, 404 eine erste Gruppe von Einlageelementen aus. Die Einlageelemente 402, 404 erstrecken sich parallel zu der durch das Grundelement 401 gebildeten Oberfläche. Die Einlageelemente 403, 405 bilden eine zweite Gruppe von Einlageelementen. Die Einlageelemente 403, 405 erstrecken sich parallel zu der durch das Grundelement 406 gebildeten Oberfläche. Die erste Gruppe der Einlageelemente 402, 404 ist insbesondere in der Fig. 6e in einer von der x-Achse und der y-Achse eines orthogonalen dreidimensionalen Koordinatensystems aufgespannten Ebene angeordnet. Die zweite Gruppe der Einlageelemente 403, 405 ist insbesondere in der Fig. 6e in einer Parallelebene zu einer von der x-Achse und der z-Achse des orthogonalen dreidimensionalen Koordinatensystems aufgespannten Ebene angeordnet. In Fig. 6e fällt die von der x-Achse und der y-Achse des orthogonalen dreidimensionalen Koordinatensystems aufgespannten Ebene mit der Blattoberfläche 411 des Blattelements 413 zusammen.

Die Einlageelemente 402, 403, 404, 405 erstrecken sich entlang einer gemeinsamen Symmetrieeachse 440, die gemäss Fig. 6c parallel zur x-Achse in einem Abstand, welcher der halben Dicke der Einlageelemente 402, 404 entspricht, oberhalb der ersten Blattoberfläche 411 verläuft. Jedes der Einlageelemente 402, 403, 404, 405 ist insbesondere als ein Bogenelement ausgebildet. Das Bogenelement kann beispielsweise die Form eines Kreisbogens aufweisen oder parabelförmig ausgestaltet sein. Insbesondere weist jedes der kreisförmigen Bogenelemente einen Radius auf, der im Wesentlichen mit dem Radius eines benachbarten Bogenelements derselben Gruppe der Einlageelemente übereinstimmt. Das Bogenelement kann auch eine vom Kreisbogen abweichende Form des Bogens aufweisen.

Die Abmessungen der Einlageelemente 402, 404 der ersten Gruppe können sich auch von den Abmessungen 403, 405 der Einlageelemente der zweiten Gruppe unterscheiden.

Jedes der in Fig. 6a, 6b, 6c, 6d, 6e gezeigten Bogenelemente weist einen ersten Schenkel 421, 431, 441, 451 und einen zweiten Schenkel 422, 432, 442, 452 sowie einen sich zwischen dem ersten und zweiten Schenkel erstreckenden Bogen 423, 433, 443, 453 auf. Der erste Schenkel 421, 431, 441, 451 ist mit dem Blattelement mittels eines ersten Aufnahmeelements 424, 434, 444, 454 verbunden und der zweite Schenkel 422, 432, 442, 452 ist mit dem Blattelement über ein zweites Aufnahmeelement 425, 435,445, 455 verbunden, sodass das Bogenelement unter Vorspannung steht. Insbesondere kann das Bogenelement aus einem stabförmigen Einlageelement erhalten werden, welches durch Verbiegen in ein Bogenelement verformt wird. Selbstverständlich können weitere Aufnahmeelemente für jedes der Einlageelemente vorgesehen sein.

Das Blattelement 413 sowie das Blattelement 416 können eine Mehrzahl von Einlageelementen 402, 403, 404, 405 enthalten, wobei die Anzahl und Anordnung der Einlageelemente in Fig. 6e nur als exemplarisches Beispiel anzusehen ist. Ein erster Teil der Einlageelemente 402, 404 bildet eine erste Gruppe aus, in welcher die Bogenelemente derart angeordnet sind, dass die ersten Enden 426, 446 von deren ersten Schenkeln 421, 441 sowie die zweiten Enden 427, 447 von deren zweiten Schenkeln 422, 442 symmetrisch in Bezug auf eine Symmetrieachse 440 angeordnet sind. Ein zweiter Teil der Einlageelemente 403, 405 bildet eine zweite Gruppe aus, in welcher die Bogenelemente derart angeordnet sind, dass die ersten Enden 436, 456, von deren ersten Schenkeln 431, 451 sowie die zweiten Enden 437, 457 von deren zweiten Schenkeln 432, 452 ebenfalls symmetrisch in Bezug auf die Symmetrieachse 440 angeordnet sind. Insbesondere können die Einlageelemente 402, 404 der ersten Gruppe in Bezug auf die Einlageelemente 403, 405 der zweiten Gruppe um einen Winkel von ungefähr 90 Grad gedreht sein. Ein Teil der Einlageelemente 302, 303 bildet eine erste Serie von Einlageelementen aus, ein weiterer Teil der Einlageelemente 304, 305 bildet eine zweite Serie von Einlageelementen aus. Das Blattelement 413 kann sich in Richtung der x-Achse des Koordinatensystems sowie in Richtung der y-Achse des Koordinatensystems über den dargestellten Abschnitt hinaus erstrecken. Das Einlageelement 402 kann Teil der ersten Serie von Einlageelementen sein, das Einlageelement 404 kann Teil einer zweiten Serie von Einlageelementen sein. Die Einlageelemente der ersten Serie können durch Spiegelung um eine oder mehrere Parallelebenen der von der x, z -Achse aufgespannten Vertikalebene erhalten werden. Die Schnittlinie jeder dieser Parallelebene mit der ersten Blattoberfläche 411 kann insbesondere eine Faltlinie ausbilden. Entlang dieser Faltlinie ist das Blattelement 413 faltbar, sodass das Strukturelement 400 entlang der Faltlinie gefaltet werden kann.

Die ersten Schenkel 421, 431, 441, 451 und die zweiten Schenkel 422, 432, 442, 452 weisen eine Krümmung auf, sodass sie die Fortsetzung des Bogens 423, 433, 443, 453 ausbilden. Weil der Bogen jedes Einlageelements 402, 404 der ersten Gruppe jeweils in den Bogen des unmittelbar benachbarten Einlageelements der zweiten Gruppe 403, 405 hinein ragt, kann ein besonders formstabiles dreidimensionales Strukturelement 400 erhalten werden.

Das Blattelement 413 wird sowohl durch das Einlageelement 402, als auch durch das Einlageelement 404 vorgespannt. Die beiden Einlageelemente 402, 404 können durch Spannelemente 428, 448 vorgespannt werden, bevor sie mit dem Blattelement 413 verbunden werden. Diese Spannelemente 428, 448 sind in Fig. 6a sowie in Fig. 6c gezeigt. Diese Spannelemente 428, 448 können entfernt werden, sobald das Einlageelement 402, 404 mittels der entsprechenden Aufnahmeelemente 424, 425, 444, 445 am Blattelement 413 befestigt ist.

Die beiden Einlageelemente 403, 405 können durch Spannelemente 438, 458 vorgespannt werden, bevor sie mit dem Blattelement 416 verbunden werden. Diese Spannelemente 438, 458 sind in Fig. 6b sowie in Fig. 6d gezeigt. Diese Spannelemente 438, 458 können entfernt werden, sobald das Einlageelement 403, 405 mittels der entsprechenden Aufnahmeelemente 434, 435, 454, 455 am Blattelement 416 befestigt ist.

Das Spannelement 428 kann durch den Bogen 433 des Einlageelements 403 verlaufen. Hierdurch wird eine provisorische Ausrichtung der Einlageelemente 402 und 403 in ihrer dreidimensionalen Lage erreicht, sodass sie im Anschluss mit den Blattelementen 413 bzw. 416 verbunden werden können.

Das Spannelement 448 kann durch den Bogen 453 des Einlageelements 405 verlaufen. Hierdurch wird eine provisorische Ausrichtung der Einlageelemente 404 und 405 in ihrer dreidimensionalen Lage erreicht, sodass sie im Anschluss mit den Blattelementen 413 bzw. 416 verbunden werden können.

Fig. 7 zeigt eine isometrische Ansicht einer ersten Variante der Einlageelemente 403, 405 des Strukturelements 400 gemäss einer der Fig. 6a-6e. Jedes der Einlageelemente 403, 405 ist um eine Achse, die parallel zur z-Achse des orthogonalen Koordinatensystems um einen Winkel von 180 Grad gedreht. Zudem ist jedes der Einlageelemente 403, 405 relativ zur Position in Fig. 6e auf dem Grundelement 406 versetzt angeordnet. Das zweite Ende 437 oder der zweite Schenkel 432 des Einlageelements 403 bzw. das zweite Ende 457 oder der zweite Schenkel 452 des Einlageelements 405 kann mit dem Spannelement 428 des Einlageelements 402 der ersten Gruppe bzw. dem Spannelement 448 des Einlageelements 404 der zweiten Gruppe verbunden sein. Diese Variante eignet sich insbesondere für ein dreidimensionales Strukturelement, welches ein Blattelement 413 als Grundelement 401 aufweist sowie ein sich einseitig von diesem Grundelement 401 erstreckendes Grundelement 406, welches ein Blattelement 416 enthält. Das Grundelement 401 und das Grundelement 406 bilden im Querschnitt ein T-förmiges Profil aus. Da der Aufbau der Grundelemente 401, 406 sowie der Einlageelemente 402, 403, 404, 405 gleich wie im vorhergehenden, in Zusammenhang mit Fig. 6a-e beschriebenen, Ausführungsbeispiels ist, werden für die Variante gemäss Fig. 7 dieselben Bezugszeichen verwendet wie in Fig. 6a-e.

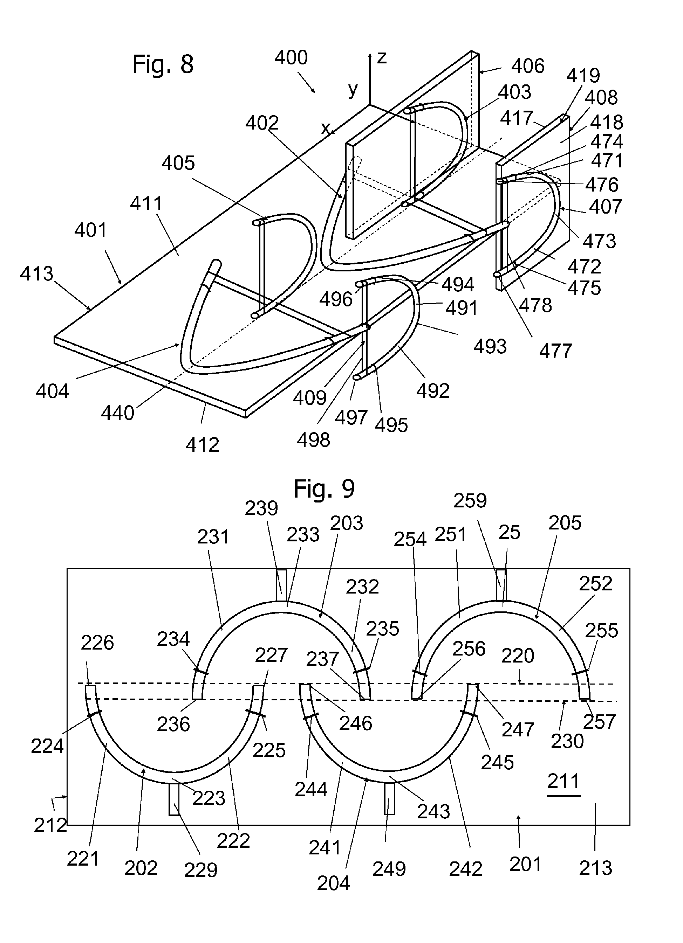

Fig. 8 zeigt eine isometrische Ansicht einer zweiten Variante der Einlageelemente des Strukturelements 400 gemäss einer der Fig. 6a-6e. Gemäss dieser Variante ist ein weiteres Grundelement 408 parallel zu dem Grundelement 406 angeordnet. Das Grundelement 408 erstreckt sich im Unterschied zum Grundelement 406 auf beide Seiten des Grundelements 401. Das Grundelement 408 ist mit einem Einlageelement 407 sowie einem Einlageelement 409 verbindbar. Das Grundelement 401 kann wie in Fig. 6b oder 6d gezeigt ist, als ein Blattelement 414 mit einer ersten Blattoberfläche 411 und einer zweiten Blattoberfläche 412 ausgebildet sein. Das Grundelement 408, welches in Fig. 8 nur teilweise gezeigt ist, um die Sicht auf die in Zusammenhang mit Fig. 7 gezeigte Anordnung nicht zu verdecken, ist als ein Blattelement 419 ausgebildet, welches eine erste Blattoberfläche 417 sowie eine zweite Blattoberfläche 418 aufweist. Selbstverständlich kann das Grundelement 406 auch Einlageelemente 403, 405 aufweisen, die gemäss einer der Fig. 6a-6e ausgestaltet sind.

Gemäss Fig. 8 ist auf der Blattoberfläche 418 ein erstes Einlageelement 407 angeordnet. Das zweite Einlageelement 409 kann ebenfalls auf der Blattoberfläche 418, könnte aber auch auf der Blattoberfläche 417 angeordnet sein. Es könnte auch je ein Einlageelement auf der ersten Blattoberfläche 417 und ein zweites Einlageelement auf der Blattoberfläche 418 vorgesehen sein. Die Einlageelemente können parallel zueinander liegen, sie könnten aber auch in einer zueinander versetzten Anordnung auf jeder der Blattoberflächen 417, 418 angeordnet sein. Wie in den vorhergehenden Ausführungsbeispielen sind die Einlageelemente 407, 409 als Bogenelemente ausgebildet. Die Bogenelemente sind derart auf zumindest einer der Blattoberflächen 417, 418 angeordnet, dass die ersten Enden 476, 496 von deren ersten Schenkeln 471, 491 sowie die zweiten Enden 477, 497 von deren zweiten Schenkeln 472, 492 symmetrisch in Bezug auf das Grundelement 401 angeordnet sind. Insbesondere kann nach einem nicht dargestellten Ausführungsbeispiel jedes der Einlageelemente 407, 409 in Bezug auf das jeweils andere Einlageelement 409, 407 um einen Winkel gedreht sein. Der Drehwinkel kann insbesondere ungefähr 90 Grad betragen, er kann auch ungefähr 180° betragen. Das Bogenelement des Einlageelements 407 kann mittels eines ersten Aufnahmeelements 474 sowie eines zweiten Aufnahmeelements 475 auf der Blattoberfläche 418 gehalten werden. Das Bogenelement des Einlageelements 409 kann mittels eines ersten Aufnahmeelements 494 sowie eines zweiten Aufnahmeelements 495 auf der Blattoberfläche 418 gehalten werden. Entlang jedes der Schenkel 471, 472 bzw. 491, 492 sowie im Bereich der Bögen 473, 493 können weitere Aufnahmeelemente vorgesehen sein, die der Einfachheit halber nicht dargestellt sind. Die Aufnahmeelemente können sich auch über zumindest einen Teil des Bogenelements erstrecken, beispielsweise als gekrümmter Kanal oder gekrümmtes Rohr ausgebildet sein.

Jedes der Bogenelemente kann ein Spannelement 478, 498 umfassen. Das Spannelement 478 erstreckt sich zwischen dem ersten Ende 474 und dem zweiten Ende 475 des Einlageelements 407. Das Spannelement 478 erstreckt sich zwischen dem ersten Ende 494 und dem zweiten Ende 495 des Einlageelements 409. Das Spannelement 478 ist mit dem zweiten Ende 427 des Einlageelements 402 verbunden. Das Spannelement 498 ist mit dem zweiten Ende 429 des Einlageelements 404 verbunden.

Fig. 9 zeigt eine Variante des Strukturelements 200, welche aus der Anordnung gemäss Fig. 4 erhalten wird, welche Einlageelemente 202, 203, 204, 205 enthält, die zusätzlich zu den Bogenelementen ein Stiftelement 229, 239, 249, 259 enthalten. Das Stiftelement 229, 239, 249, 259 ragt gemäss dieses Ausführungsbeispiels über den entsprechenden Bogen 223, 233, 243, 253 hinaus. Das Stiftelement kann ebenfalls mittels eines Aufnahmeelements auf der ersten Oberfläche 211 des Blattelements 213 befestigt sein. Diese Variante ist in Fig. 9 zeichnerisch nicht dargestellt.

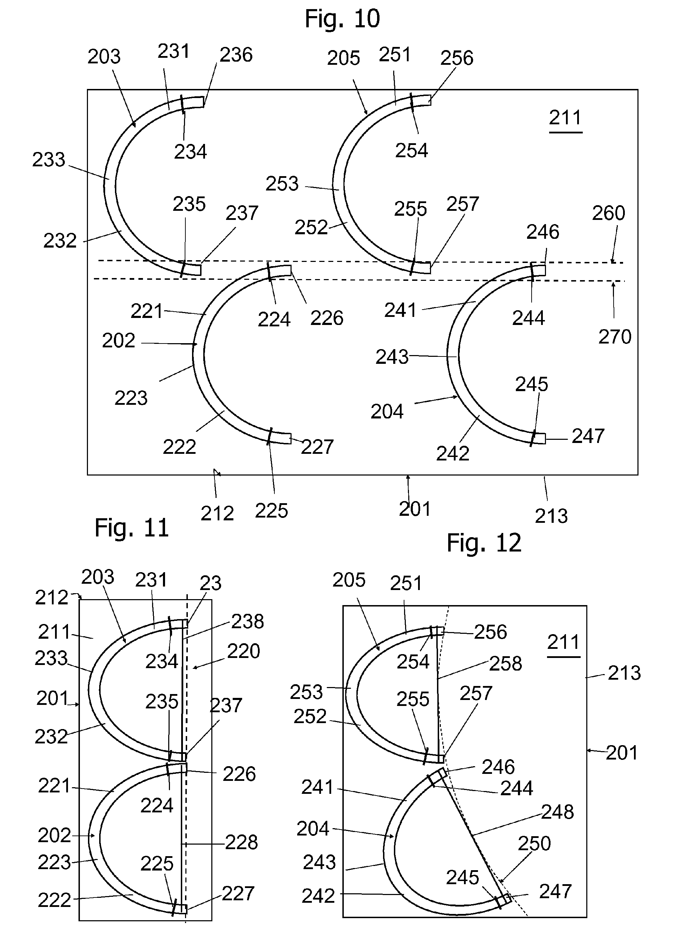

Fig. 10 ist eine Variante des Strukturelements 200, welche aus der Anordnung gemäss Fig. 4 erhalten wird, indem die Einlageelemente 203, 205 um einen Winkel von 90 Grad im Gegenuhrzeigersinn um eine durch das erste Ende 236 bzw. das erste Ende 256 verlaufende Drehachse gedreht werden, wobei die Drehachse gemäss der Darstellung von Fig. 10 normal zur Zeichnungsebene gerichtet ist.

Die Einlageelemente 202, 204 werden um einen Winkel von 90 Grad im Uhrzeigersinn um eine durch das erste Ende 226 bzw. das erste Ende 246 verlaufende Drehachse gedreht, wobei die Drehachse gemäss der Darstellung von Fig. 10 normal zur Zeichnungsebene gerichtet ist.

Die Einlageelemente 202, 204 können entlang des durch die Geraden 220, 230 gebildeten Bandes in Längsrichtung desselben verschoben werden, um eine Überschneidung oder Überlappung der einzelnen Einlageelemente 202, 203, 204, 205 zu vermeiden.

Nach einer in Fig. 11 dargestellten Variante eines Strukturelements 200 können die Einlageelemente 202 und 203 auch unmittelbar aneinander anschliessen. Die Einlageelemente 202, 203 weisen dieselbe räumliche Ausrichtung auf, die hier nicht dargestellten Einlageelemente 203, 205 können entlang der Gerade 220 in gespiegelter Anordnung angeordnet sein, sie können aber auch ähnlich wie in Fig. 5 gezeigt ist, parallel zueinander angeordnet sein. Entlang der Gerade 220 oder einer Parallellinie zu der Geraden 220 kann je ein Spannelement 228, 238 angeordnet sein, welches den Spannelementen entsprechen kann, die in einem der Ausführungsbeispiele gemäss Fig. 6a-e, Fig. 7, Fig. 8 gezeigt sind. Die Gerade 220 oder eine parallel dazu durch die Bogenelemente verlaufende Parallellinie kann auch als ein gemeinsames Spannelement ausgebildet sein. Jedes der Spannelemente 228, 238 kann temporär zur Vorspannung der Bogenelemente vor der Verbindung mit dem Grundelement vorgesehen werden. Wenn die Spannelemente 228, 238 aus einem biegeschlaffen Material bestehen, wie beispielsweise einem Draht, Faden, Kabel, Seil oder dergleichen, welches insbesondere eine Elastizität aufweisen kann, können die Spannelemente auch Bestandteil des Strukturelements 400 bleiben.

Jedes der in Fig. 11 gezeigten Bogenelemente weist einen ersten Schenkel 221, 231 und einen zweiten Schenkel 222, 232 sowie einen sich zwischen dem ersten und zweiten Schenkel erstreckenden Bogen 223, 233 auf. Der erste Schenkel 221, 231 ist mit dem Blattelement mittels eines ersten Aufnahmeelements 224, 234 verbunden und der zweite Schenkel 222, 232 ist mit dem Blattelement über ein zweites Aufnahmeelement 225, 235 verbunden, sodass das Bogenelement unter Vorspannung steht. Insbesondere kann das Bogenelement aus einem stabförmigen Einlageelement erhalten werden, welches durch Verbiegen in ein Bogenelement verformt wird. Durch die Spannelemente 228, 238 können die Bogenelemente unter Vorspannung in der Position gehalten werden, die der Endposition auf dem Grundelement 201 entspricht. Insbesondere können sie exakt mit den Aufnahmeelementen 225, 235 verbunden werden.

Fig. 12 zeigt eine Variante des Ausführungsbeispiels des Strukturelements 200 gemäss Fig. 11. Die Einlageelemente 204, 205 schliessen wie in Fig. 11 unmittelbar aneinander an. Die Einlageelemente 204, 205 weisen unterschiedliche räumliche Ausrichtung zueinander auf, da sie entlang einer Krümmungslinie 250 verlaufen. Diese Krümmungslinie 250 kann selbst Bestandteil eines Kreisbogens oder eines Kreises sein. Wenn die Einlageelemente entlang eines geschlossenen Kreises angeordnet sind, bilden sie eine Anordnung aus, die mit Blütenblättern einer Blume vergleichbar ist. Jedes der Einlageelemente 204, 205 kann je ein Spannelement 248, 258 enthalten, welches den Spannelementen entsprechen kann, die in einem der Ausführungsbeispiele gemäss Fig. 6a-e, Fig. 7, Fig. 8, Fig. 11 gezeigt sind. Jedes der Spannelemente kann eine Tangente an die Krümmungslinie ausbilden. Jedes der Spannelemente 228, 238 kann temporär zur Vorspannung der Bogenelemente vor der Verbindung mit dem Grundelement 201 vorgesehen werden.

Die Strukturelemente enthalten, ohne auf diese Form beschränkt zu sein, Grundelemente 1, 101, 201, 301, 401, 406, 408, die als ein Blattelement mit rechteckiger Oberfläche ausgebildet sind. Nach einem nicht dargestellten Ausführungsbeispiel kann das Strukturelement eine kreisförmige, ovale oder mehreckige, insbesondere viereckige Oberfläche aufweisen. Die Oberfläche kann auch Wölbungen oder Vertiefungen enthalten.

Jedes der Einlageelemente wird durch mindestens zwei Aufnahmeelemente gehalten. Selbstverständlich können weitere Aufnahmeelemente für jedes der Einlageelemente vorgesehen sein. Insbesondere können die Aufnahmeelemente eine stabförmige oder röhrenförmige Hülle für das Einlageelement ausbilden. Durch die Aufnahmeelemente wird das Einlageelement unter Vorspannung gehalten, um ein Strukturelement mit erhöhter Formstabilität auszubilden.

Nach jedem der vorhergehenden Ausführungsbeispiele können Einlageelemente nur auf einer Blattoberfläche eines Blattelements angeordnet sein, sie können aber auch auf beiden Blattoberflächen des Blattelements angeordnet sein. Insbesondere können die auf der ersten Blattoberfläche angeordneten Einlageelemente versetzt zu den auf der zweiten Blattoberfläche angeordneten Einlageelementen angeordnet sein.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Strukturelement (10, 100, 200, 300, 400), enthaltend ein Grundelement (1, 101, 201, 301, 401, 406, 408) und eine Mehrzahl von Einlageelementen (2, 3, 4, 5, 102, 103, 104, 105, 202, 203, 204, 205, 302, 303, 304, 305, 402, 403, 404, 405, 407, 409), wobei das Grundelement als biegeschlaffes Blattelement (13, 113, 213, 313, 413, 416, 419) ausgebildet ist, wobei das biegeschlaffe Blattelement eine erste Blattoberfläche (11, 111, 211, 311, 411, 414, 417) und eine zweite Blattoberfläche (12, 112, 212, 312, 412, 415, 418) aufweist, wobei die erste Blattoberfläche der zweiten Blattoberfläche gegenüber liegt, wobei die Einlageelemente mit dem biegeschlaffen Blattelement verbunden sind, **dadurch gekennzeichnet, dass** die Einlageelemente im biegeschlaffen Blattelement verschiebbar gelagert sind, wobei durch die Einlageelemente das biegeschlaffe Blattelement derart spannbar ist, dass jedes der Einlageelemente zusammen mit dem biegeschlaffen Blattelement eine formstabile Oberfläche ausbildet.

2. Strukturelement nach Anspruch 1, wobei die Einlageelemente als stabförmige Einlageelemente ausgebildet sind.

3. Strukturelement nach Anspruch 2, wobei die stabförmigen Einlageelemente als Bogenelemente ausgebildet sind.

4. Strukturelement nach Anspruch 3, wobei das Bogenelement einen ersten Schenkel (21, 31, 41, 51, 121, 131, 141, 151, 221, 231, 241, 251, 321, 331, 341, 351, 421, 431, 441, 451, 471, 491) und einen zweiten Schenkel (22, 32, 42, 52, 122, 132, 142, 152, 222, 232, 242, 252, 322, 332, 342, 352, 422, 432, 442, 452, 472, 492) sowie einen sich zwischen dem ersten und zweiten Schenkel erstreckenden Bogen (23, 33, 43, 53, 123, 133, 143, 153, 223, 233, 243, 253, 323, 333, 343, 353, 423, 433, 443, 453, 473, 493) aufweist, wobei der erste Schenkel mit dem Blattelement mittels eines ersten Aufnahmeelements (24, 34, 44, 54, 124, 134, 144, 154, 224, 234, 244, 254, 324, 334, 344, 354, 424, 434, 444, 454, 474, 494) verbunden ist und der zweite Schenkel mit dem Blattelement über ein zweites Aufnahmeelement (25, 35, 45, 55, 125, 135, 145, 155, 225, 235, 245, 255, 325, 335, 345, 355, 425, 435, 445, 455, 475, 495) verbunden ist, sodass das Bogenelement unter Vorspannung steht.

5. Strukturelement nach einem der Ansprüche 3 oder 4, wobei das Blattelement (13, 113, 213, 313) eine Mehrzahl von Einlageelementen enthält, wobei ein erster Teil der Einlageelemente (2, 4, 102, 104, 202, 204, 302, 304) eine erste Reihe oder Gruppe ausbilden, in welcher die Bogenelemente derart angeordnet sind, dass die ersten Enden (26, 46, 126, 146, 226, 246, 326, 346) von deren ersten Schenkel (21, 41, 121, 141, 221, 241, 321, 341), sowie die zweiten Enden (27, 47,127, 147, 227, 247, 327, 347) von deren zweiten Schenkel (22, 42, 122, 142, 222, 242, 322, 342) auf einer gemeinsamen Geraden (20, 120, 220, 320) liegen, wobei ein zweiter Teil der Einlageelemente (3, 5, 103, 105, 203, 205, 303, 305) eine zweite Reihe oder Gruppe ausbilden, in welcher die Bogenelemente derart angeordnet sind, dass die ersten Enden (36, 56, 136, 156, 236, 256, 336, 356) von deren ersten Schenkel (31, 51, 131, 151, 231, 251, 331, 351), sowie die zweiten Enden (37, 57, 137, 157, 237, 257, 337, 357) von deren zweiten Schenkel (32, 52, 132, 152, 232, 252, 332, 352) auf einer gemeinsamen Geraden (30, 130, 230, 330) liegen.

6. Strukturelement nach einem der Ansprüche 4 oder 5, wobei an ein Bogenelement einer ersten Reihe oder Gruppe ein Bogenelement einer zweiten Reihe oder Gruppe anschliesst, wobei das Bogenelement der ersten Reihe oder Gruppe um eine Gerade, welche parallel zu einer der Geraden (20, 30, 120, 130, 220, 230, 260, 270) durch eines der ersten oder zweiten Enden (26, 27, 36, 37, 46, 47, 126, 127, 146, 147, 226, 227, 246, 247) verläuft, gespiegelt und/oder versetzt angeordnet ist.

7. Strukturelement nach einem der vorhergehenden Ansprüche, wobei das Einlageelement ein erstes Bogenelement sowie zumindest ein zweites Bogenelement enthält, wobei die Bogenelemente eine gemeinsame Symmetrieeachse aufweisen.

8. Strukturelement nach einem der vorhergehenden Ansprüche, wobei ein erstes Einlageelement auf oder in einem ersten Grundelement angeordnet und ein zweites Einlageelement auf oder in einem zweiten Grundelement angeordnet ist, wobei das erste Grundelement und das zweite Grundelement einen Winkel zueinander einschliessen, der grösser als 0 Grad und kleiner als 180 Grad ist.

9. Strukturelement nach Anspruch 8, wobei ein drittes Einlageelement auf oder in einem dritten Grundelement angeordnet ist.

10. Strukturelement nach einem der Ansprüche 4 bis 9, wobei das Aufnahmeelement ein Element aus der Gruppe einer Öffnung, einer Öse, einer Schlaufe, einer Schelle, einer Nut, einem Geflecht, einem Faden, einem Draht, einem ringförmigen Element oder einem hakenförmigen Element enthält.

11. Strukturelement nach einem der vorhergehenden Ansprüche, wobei das Grundelement mindestens eine Faltlinie aufweist, sodass das Grundelement in mindestens zwei Teilgrundelemente faltbar ist, wobei ein Teil der Einlageelemente auf einem ersten Teilgrundelement angeordnet ist, wobei ein weiterer Teil der Einlageelemente auf einem zweiten Teilgrundelement angeordnet ist, wobei die Teilgrundelemente und zugehörigen Einlageelemente übereinander angeordnet werden können, sodass das Grundelement auf weniger als die Hälfte, vorzugsweise auf weniger als ein Drittel seiner ursprünglichen Oberfläche reduzierbar ist.

12. Strukturelement nach einem der vorhergehenden Ansprüche, wobei das Einlageelement ein Spannelement (228, 238, 248, 258, 428, 438, 448, 458, 478, 498) enthält, wobei durch das Spannelement eine Krümmung des Einlageelements erzeugbar sein kann, sodass das Einlageelement insbesondere als Bogenelement ausgebildet ist.

13. Strukturelement nach einem der Ansprüche 12 oder 13, wobei das Spannelement nach Befestigung des Einlageelements am Grundelement durch die Aufnahmeelemente entfernt werden kann.

14. Verfahren zur Herstellung eines Strukturelements nach einem der vorhergehenden Ansprüche, wobei in einem ersten Schritt ein Grundelement bereitgestellt wird, in einem zweiten Schritt ein Einlageelement vorgespannt wird, in einem dritten Schritt das vorgespannte Einlageelement auf dem Grundelement befestigt wird, in einem vierten Schritt die Vorspannung des Einlageelements entfernt wird.

15. Verwendung eines Strukturelements nach einem der vorhergehenden Ansprüche als Versteifungselement oder als Deckenelement oder als Stützelement.
